Europäisches Patentamt

European Patent Office

Office européen des brevets

(11) Publication number: **0 004 448**
A1

## (12) EUROPEAN PATENT APPLICATION

(21) Application number: 79300428.4

(22) Date of filing: 19.03.79

(51) Int. Cl.²: **F 01 P 7/08, F 04 D 27/02,** G 05 D 23/24, F 28 B 11/00

(30) Priority: 23.03.78 GB 1158378
31.05.78 GB 1158378

(43) Date of publication of application: 03.10.79
Bulletin 79/20

(84) Designated Contracting States: DE FR IT NL SE

(71) Applicant: COVRAD Limited, Sir Henry Parkes Road Canley, Coventry CV5 6BN (GB)

(72) Inventor: Beard, Richard Anthony, 6 Thurnmill Road Long Lawford, Rugby Warwickshire (GB)

(74) Representative: Whaley, David Herbert, Cawston House Cawston, Rugby Warwickshire CV22 7SA (GB)

(54) **Method and apparatus for control of a cooling system.**

(57) Method and apparatus for control of a stationary fan-cooled cooling system, especially of a large diesel engine (14), having a heat exchanger (10) through which airflow is passed by fans (15) driven by motors (16).

To avoid waste of power by motors (16), and to extend their life, all the fluid to be cooled is continuously circulated through the heat exchanger (10) and one of a number of fans (15) is caused by a sequence control system (18) to start operation on increase in fluid temperature sensed by a sensor (17), and one to stop on decrease of temperature, the control system (18) selecting the fan each time in accordance with a criterion related to running time.

The control system (18) may start a fan after a short delay on increase of temperature, and stop one after a substantial delay on decrease of temperature.

- 1 -

METHOD AND APPARATUS FOR CONTROL OF A COOLING SYSTEM

The invention relates to a method and apparatus for the control of a stationary fan-cooled cooling system, particularly but not exclusively a cooling system of a large stationary diesel engine, used for example for electric power generation.

Cooling systems are known in motor vehicles which use a motor-driven fan of which the motor is brought into operation when a temperature sensed exceeds a given value. However, in such an installation cooling is achieved primarily by the motion of the vehicle. Moreover, in such an installation a single fan is used, and a thermostatically-controlled by-pass is provided which by-passes liquid from the outlet of the engine back to the inlet, by-passing the radiator when the coolant temperature is below a pre-determined value.

Hitherto, in stationary fan-cooled cooling systems the control of the amount of heat dissipated in the system has been primarily by means of a thermostatically-controlled by-pass which causes the fluid being cooled to by-pass the heat exchanger to a large extent when the temperature is low and to a decreasing extent as the fluid temperature increases, the entire flow of fluid only passing through the heat exchanger when the fluid is at or near its maximum temperature. In such stationary fan-cooled cooling systems it is known to provide a single fan or a plurality of fans; in the latter case all the fans associated with the heat exchanger begin operation simultaneously and cease operation simultaneously; moreover it has been the practice either for the fans to be switched on and off by manual control, or for the fans to be switched on automatically when the diesel engine or other apparatus to be cooled begins operation, and to remain switched on until the diesel engine or other apparatus ceases to operate.

Moreover, except on start-up or under very unusual conditions a proportion of the coolant is not by-passed but passes through the heat exchanger, and thus the fan or fans must be in operation for a high proportion of the time when the engine is running.

With a large installation powerful fan motors are used, and the power required to drive the fan or fans is largely wasted, except under conditions when a substantial amount of heat must be dissipated.

According to the present invention in one aspect a method for the control of a stationary fan-cooled cooling system includes circulating the whole of the fluid to be cooled through a cooling heat exchanger - under all conditions and automatically varying the air flow passed in heat exchange relation with said fluid by bringing into operation successively, in accordance with a first predetermined criterion related to the length of time each fan has been in operation, or out of operation, a plurality of fans in accordance with the temperature of the said fluid, whereby to increase the air flow through the heat exchanger as said temperature increases, and stopping operation of the fans in response to a fall in said temperature in accordance with a second predetermined criterion related to the length of time each fan has been in operation.

According to the present invention in another aspect, apparatus for the control of a stationary fan-cooled cooling system includes a plurality of motor-driven fans in operative relation to a cooling heat exchanger, means to circulate the whole of the fluid to be cooled through the cooling heat exchanger under all conditions, means to sense the temperature of the fluid to the cooled, and a settable sequence control system connected to said motors to bring them automatically into operation successively, in accordance with a first predetermined criterion related to the length of time each fan has been in operation or out of operation, as a result of the sensing by the temperature-sensing means of an increase in the fluid temperature, and causing the motors to cease operation, as a result of the sensing of a decrease in said temperature, in accordance with a second predetermined criterion related to the length of time each fan has been in operation.

The first (switch-on) predetermined criterion may either be that, during automatic operation, the next fan to be brought into operation is the one which has been out of operation for the longest continuous period of time (in this case the order in which the fans are first brought into operation is arbitrary);or alternatively the first criterion may be that the next fan to be brought into operation is the one which has operated for the shortest total time since a given event (e.g. since installation).

The second (switch-off) predetermined criterion may either be that the first fan to stop operation is the one which has been in operation for the longest continuous period at that moment;  or alternatively the second criterion may be that the next fan to stop operation is the one which has operated for the longest total time since a given event (e.g.since installation).

The first and second criteria may be chosen independently of one another.

Preferably the sequence control system includes means to ensure that, on an increase in temperature of the fluid above a first predetermined value, there is a short delay, for example five seconds, before the appropriate fan motor is brought into operation. Preferably also the control system includes means to ensure that, on a decrease in temperature of the fluid below a second predetermined value, there is a substantial delay, for example three minutes, before the appropriate motor is caused to cease operation. Both the delay periods, i.e. both that on increase and that on decrease of temperature, may be varied independently of one another.

The main advantage offered by the invention is that the waste of fan power is avoided. Since a thermostatically-controlled by-pass is no longer used, the cost and the space requirement of the by-pass is eliminated. Moreover, sequential switching of the fan motors in accordance with the invention ensures that the fan and motor installation has a longer life between overhauls than when all the fans are in operation for almost all the time the engine is in service. Furthermore, it avoids a problem which would be experienced if a plurality of fans were to be used, and switched to come into operation together under control of a coolant temperature-sensing device, and to cease operation together under control of the device. In this case, when the engine is running at light load, and the amount of heat to be dissipated is therefore small, the cooling capacity would be in excess of the heat to be dissipated and the set of fans would therefore be frequently switched on and off, resulting in a reduction in the life of the fans and motors.

One embodiment of the invention will now be described by way of example with reference to the accompanying drawings, of which

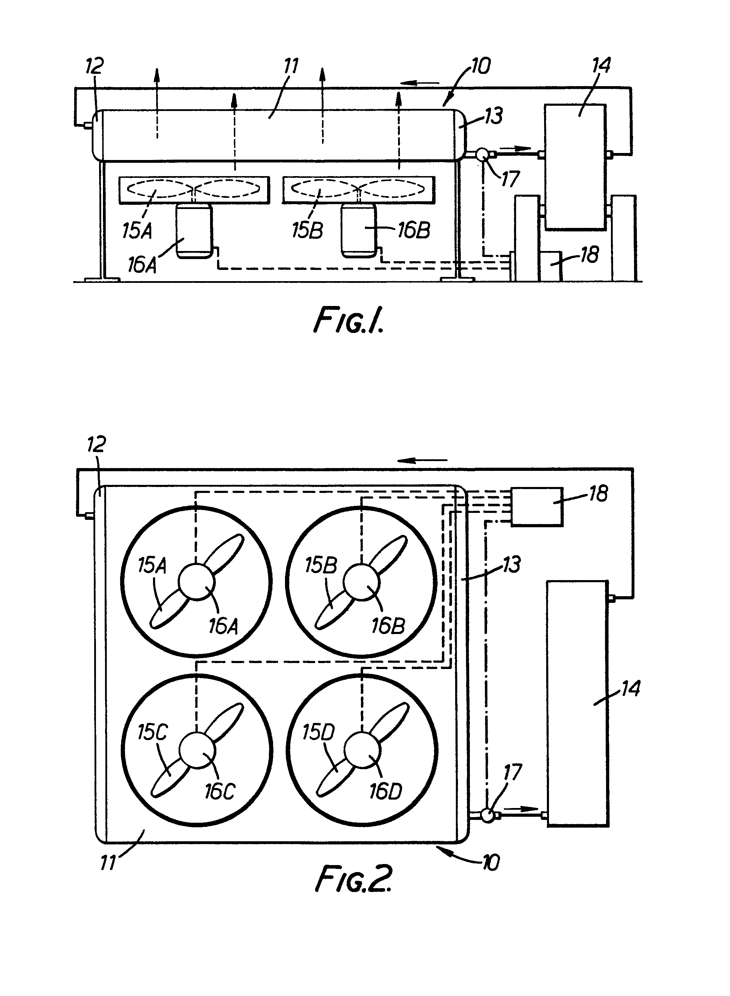

Figure 1 is a diagram of a cooling installation in elevation, and

Figure 2 is a diagrammatic inverted plan view.

The cooling installation includes a horizontally-disposed heat exchanger 10, the heat exchange matrix 11 extending between two manifolds 12, 13. Heated cooling liquid from, for example, a diesel engine 14 is led to one manifold 12, and after being cooled in the matrix 11, is returned from the other manifold 13 to the engine 14.

Four cooling fans 15A, 15B, 15C, 15D, each individually driven by an electric motor 16A, 16B, 16C, 16D, are arranged below the matrix 11, to rotate about vertical axes. One fan is beneath each quarter of the matrix. The motors 16 are described as constant-speed motors in this example.

During operation, water is constantly circulated through the heat exchanger matrix, and no by-pass is provided for the water. The amount of heat extracted from the cooling water is regulated by a control system, which determines the number of fans in operation at any instant. It will be appreciated that the greater the number of fans in operation, the greater will be the heat extracted from the cooling liquid flowing through the heat exchanger matrix 11.

The control system includes a temperature-responsive sensor 17 sensitive to the temperature of the cooling liquid at outlet from the heat exchanger, and a settable sequence control system 18. The latter may for example be an adaptation of the HT 2000 sequence control system which is available from System 2000, of Knighton Fields Road East, Leicester. This system may be set to any temperature in a range, e.g. the range 20 $^{o}$C to 90 $^{o}$C, and moreover the width of the "dead band" (i.e. the difference between the value of temperature at which the control operates when temperature is increasing and the value at which it operates when the temperature is decreasing) may also be set independently of the setting of the absolute value of temperature.

For example, the system may be set at a temperature of 60 $^{o}$C, and the "dead band" may be set at a total value of 4 $^{o}$C; thus on increase of temperature the control will operate when the value sensed rises above 62 $^{o}$C, and on decrease of temperature the control will operate when the value sensed falls below 58 $^{o}$C.

Moreover, the sequence control system is connected to the four motors 16 to operate them automatically in a sequence which is determined by certain criteria, as will be described. In the example which follows, it will be assumed that the system operates according to the first alternative mentioned above in respect of both the first (switch-on) predetermined criterion and the second (switch-off) predetermined criterion.

Assuming that initially the heat exchanger 10 is cold, and the diesel engine is then started, then (with the example taken) when the temperature experienced by sensor 17 increases to 62 $^{o}$C, the control 18 switches on the first fan motor 16A to drive fan 15A. A short delay period, e.g. five seconds, may be provided between the time at which the temperature is sensed and the time at which the first fan motor is switched on. The operation of the fan initially tends to reduce the temperature; if this falls below 58 $^{o}$C (in the example given) the first fan motor 16A is - after a delay - switched off.   The delay period on reduction of temperature is preferably substantial, for example three minutes.   Both the delay periods, i.e. that on temperature increase, and that on temperature decrease, may be separately varied.   If on the other hand the temperature, with the first fan 15A in operation, rises to 62 $^{O}$C, then the sequence control causes the second fan motor 16B to be switched on, after the appropriate delay period.   Operation of the second fan 15B initially tends to reduce the temperature.

If the temperature with the first and second fans 15A, 15B in operation rises again to 62 $^{O}$C, then the sequence control causes the third fan motor 16C to be switched on;  and a further rise would cause the fourth fan motor 16D to be switched on.   Using the first alternative "switch-on" criterion mentioned above, the order in which the fans  are first brought into operation, when the diesel engine is started, is arbitrary;  but after that, the fan which is next brought into operation, when the temperature rises to 62 $^{O}$C, is the one which has been out of operation for the longest continuous period of time.   Likewise each time the temperature falls to 58 $^{O}$C, (using the first alternative "switch-off" criterion mentioned above) the fan motor which has been in operation for the longest continuous period of time at that moment is, after the appropriate delay, switched off.

If the second alternative "switch-on" criterion is chosen, then, when the temperature rises to 62 $^{O}$C, the fan which has operated for the shortest total time since a given event (e.g. since installation) is caused, after the appropriate delay, to be switched on.

Moreover, if the second alternative "switch-off" criterion is chosen, then, each time the temperature falls to 58 °C, the fan which has operated for the longest total time since a given event (e.g. since installation) is caused to be switched off.

The first alternative "switch-on" criterion may be chosen with the second alternative "switch-off" criterion, and vice versa.

It will be appreciated that the figures given are only by way of example; clearly the control could be set to say 50 °C, and the width of the "dead band" could be a different figure, e.g. 2 °C. Moreover, the sequence control may be employed with any number of fans from two upwards, for example eight fans.

The cooling installation will be so designed that it is capable of dissipating the maximum heat generated by the engine (or other apparatus to be cooled) at the hottest atmospheric temperature to be encountered; and it will be clear that by control of the cooling air flow in this way, no thermostatically-controlled by-pass is needed for the cooling water. Moreover, the same principle may be employed in conjunction with a lubricating oil cooler or a charge air cooler of an engine, or any other cooler for a liquid or gas employing air as the cooling medium.

Moreover, the fans may be driven by two-speed or multi-speed motors, although this would result in a rather more complex control system; in the case of two-speed motors the sequence control would, when a fan motor is operating at low speed, cause it to be switched next to operate at the higher speed, on increase of temperature; likewise on reduction of temperature the sequence control would switch the fan which had been in operation for the longest time from its higher speed to its lower speed, and only if the temperature again fell would it switch that fan off altogether.

The engine coolant is circulated through the heat exchanger 10 by a pump forming part of the engine 14, in known manner.

Other variations within the scope of the invention will be readily apparent.

Claims :

1.    A method for the control of a stationary fan-cooled cooling system characterised in that the whole of the fluid to be cooled is circulated through a cooling heat exchanger (10) under all operating conditions, and by automatically varying the airflow passed in heat-exchange relation with said fluid by bringing into operation successively, in accordance with a first predetermined criterion related to the length of time each fan has been in operation, or out of operation, a plurality of fans (15A, 15B, 15C, 15D) in accordance with the temperature of the said fluid, whereby to increase the airflow through the heat exchanger as said temperature increases, and stopping operation of the fans (15A, 15B, 15C, 15D) in response to a fall in said temperature in accordance with a second predetermined criterion related to the length of time each fan has been in operation.

2.    A method as claimed in claim 1 wherein the first predetermined criterion is that, during automatic operation, the next fan (15A, 15B, 15C, 15D) to be brought into operation is the one which has been out of operation for the longest continuous period of time.

3.    A method as claimed in claim 1 wherein the first predetermined criterion is that, during automatic operation, the next fan (15A, 15B, 15C, 15D) to be brought into operation is the one which has operated for the shortest total time since a given event.

4.    A method as claimed in any one of claims 1 - 3 wherein the second predetermined criterion is that, during automatic operation, the first fan (15A, 15B, 15C, 15D) to stop operation is the one which has been in operation for the longest continuous period.

5.    A method as claimed in any one of claims 1 - 3 wherein the second predetermined criterion is that the next fan (15A, 15B, 15C, 15D) to stop operation is the one which has operated for the longest total time since a given event.

6.    A method as claimed in any one of claims 1 - 5 wherein on an increase in temperature of the fluid above a predetermined value there is a short delay before the appropriate fan motor (16A, 16B, 16C, 16D) is brought into operation.

7.    A method as claimed in any one of claims 1 - 6 wherein on a decrease in temperature of the fluid below a predetermined value there is a substantial delay before the appropriate fan motor (16A, 16B, 16C, 16D) is caused to cease operation.

8.    Apparatus for the control of a stationary fan-cooled cooling system, including a plurality of motor-driven fans (15A, 15B, 15C, 15D) in operative relation to a cooling heat exchanger (10), characterised by means to circulate the whole of the fluid to be cooled through the cooling heat exchanger under all operating conditions, means (17) to sense the temperature of the fluid to be cooled, and a settable sequence control system (18) connected to said motors (16A, 16B, 16C, 16D) to bring them automatically into operation successively, in accordance with a first predetermined criterion related to the length of time each fan (15A, 15B, 15C, 15D) has been in operation or out of operation, as a result of the sensing by the temperature-sensing means (17) of an increase in the fluid temperature, and causing the motors (16A, 16B, 16C, 16D) to cease operation, as a result of the sensing of a decrease in said temperature, in accordance with a second predetermined criterion related to the length of time each fan (15A, 15B, 15C, 15D) has been in operation.

9.   Apparatus as claimed in claim 8 wherein the first predetermined criterion is that, during automatic operation, the next fan (15A, 15B, 15C, 15D) to be brought into operation is the one which has been out of operation for the longest continuous period of time.

10.   Apparatus as claimed in claim 8 wherein the first predetermined criterion is that, during automatic operation, the next fan (15A, 15B, 15C, 15D) to be brought into operation is the one which has operated for the shortest total time since a given event.

11.   Apparatus as claimed in any one of claims 8 - 10 wherein the second predetermined criterion is that, during automatic operation, the first fan (15A, 15B, 15C, 15D) to stop operation is the one which has been in operation for the longest continuous period.

12.   Apparatus as claimed in any one of claims 8 - 10 wherein the second predetermined criterion is that the next fan (15A, 15B, 15C, 15D) to stop operation is the one which has operated for the longest total time since a given event.

0004448

13.   Apparatus as claimed in any one of claims 8 - 12, wherein the sequence control system (18) includes means to ensure that, on sensing of an increase in the temperature of the fluid to be cooled, there is a short delay before the appropriate fan motor (16A,16B, 16C, 16D) is brought into operation.

14.   Apparatus as claimed in any one of claims 8 - 13 wherein the sequence control system (18) includes means to ensure that, on a decrease in temperature of the fluid to be cooled, there is a substantial delay before the appropriate motor (16A, 16B, 16C, 16D) is caused to cease operation.

1/1                                                    0004448

*Fig.1.*

*Fig.2.*

European Patent Office

**EUROPEAN SEARCH REPORT**

0004448

Application number

EP 79 30 0428

## DOCUMENTS CONSIDERED TO BE RELEVANT

| Category | Citation of document with indication, where appropriate, of relevant passages | Relevant to claim |
|---|---|---|
| | DE - B - 1 069 427 (VAPOR HEATING CORP.) <br><br> * Figure 1, column 4, lines 3-12; column 6, lines 26-57 * <br><br> -- | 1,8 |
| | FR - A - 2 236 155 (THE MARLEY CY.) <br><br> * Page 22, line 15 - page 24, line 20 * <br><br> -- | 1,8 |
| A | US - A - 3 853 174 (KRAMER) <br><br> * Figure 1, column 2, lines 23-37 * <br><br> ---- | 1 |

**CLASSIFICATION OF THE APPLICATION (Int. Cl.²)**

F 01 P 7/08
F 04 D 27/02
G 05 D 23/24
F 28 B 11/00

**TECHNICAL FIELDS SEARCHED (Int.Cl.²)**

F 01 P
F 04 D
G 05 D
F 28 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 17-05-1979 | WASSENAAR |

EPO Form 1503.1 06.78